# FASCICULE DE BREVET EUROPEEN

(11) **EP 2 046 529 B1**
(45) Date de publication et mention de la délivrance du brevet: **25.04.2012**
(21) Numéro de dépôt: 07823281.6
(22) Date de dépôt: 11.07.2007
(51) Int. Cl.: B24B 9/14, G02C 1/06, B24D 7/02

(54) **PAIRE DE LUNETTES OPHTALMIQUES ET PROCEDE DE FORMATION D'UNE NERVURE PERIPHERIQUE D'EMBOITEMENT SUR LE CHANT D'UNE LENTILLE**
BRILLENGLASPAAR UND VERFAHREN ZUR FORMUNG EINER PERIPHEREN FASSUNGSRIPPE AUF DER KANTE EINES BRILLENGLASES
PAIR OF OPHTHALMIC GLASSES AND METHOD FOR FORMING A PERIPHERAL MOUNTING RIB ON THE EDGE OF A LENS

(30) Priorité: 04.08.2006 FR 0607145
(43) Date de publication de la demande: 15.04.2009
(73) Titulaire: Essilor International (Compagnie Générale d'Optique), 94220 Charenton-le-Pont (FR)
(72) Inventeur: NAUCHE, Michel, F-94220 Charenton le Pont (FR)
(74) Mandataire: Chauvin, Vincent
(86) Numéro de dépôt international: PCT/FR2007/001190
(87) Numéro de publication internationale: WO 2008/015324

(56) Documents cités:
- EP-A- 0 894 568
- WO-A-01/70461
- DE-A1- 2 924 480
- FR-A1- 2 763 269
- FR-A1- 2 852 878
- GB-A- 509 954
- US-A1- 2 284 262
- US-A1- 3 894 361

## Description

### DOMAINE TECHNIQUE AUQUEL SE RAPPORTE L'INVENTION

La présente invention concerne de manière générale le montage de lentilles ophtalmiques d'une paire de lunettes ophtalmiques dans une monture et vise plus particulièrement l'emboîtement d'une lentille dans un entourage de monture d'une paire de lunettes ophtalmiques correctrices ou solaires.

### ARRIÈRE-PLAN TECHNOLOGIQUE

Une monture comporte habituellement des cercles présentant un drageoir intérieur formant une rainure. Le détourage d'une lentille en vue de son montage dans la monture choisie par le futur porteur consiste alors à modifier le contour de la lentille pour l'adapter à cette monture.

Pour les lentilles de montures cerclées, le détourage de la lentille comporte une étape de finition appelée biseautage (ou nervurage) qui consiste à assurer la formation d'une nervure usuellement appelée biseau, en général de section transversale triangulaire, sur le chant de la lentille ophtalmique. Ce biseau est destiné à être engagé dans le drageoir ménagé dans le cercle, ou entourage, de la monture de lunettes dans lequel la lentille doit être montée.

Classiquement, comme le montrent par exemple les documents DE 29 24 480 et US 3 894 361, les moyens de détourage sont constitués par une machine à meuler, appelée meuleuse, qui possède un train de meules principales et des moyens de blocage et d'entraînement en rotation de la lentille constitués par deux arbres rotatifs coaxiaux montés mobiles l'un par rapport à l'autre axialement pour serrer la lentille suivant l'axe de celle-ci à la façon d'une pince.

De manière générale, on effectue d'abord une étape d'ébauche de la périphérie de la lentille sur une meule d'ébauche cylindrique présente sur le train de meules. Durant cette étape d'ébauche, la lentille est dégrossie de façon à s'approcher de la forme que l'on souhaite donner à la lentille. Puis, sur une meule de finition cylindrique de grain plus fin et pourvue d'une gorge de nervurage en V, on réalise l'étape de finition. La forme souhaitée de la périphérie de la lentille est atteinte avec précision et le biseau est formé par la gorge de nervurage qui imprègne sa forme sur le chant de la lentille.

La lentille détourée comporte ainsi un biseau à section en V qui présente deux flancs opposés coniques chacun prolongé jusqu'à la face avant ou arrière correspondante sur le chant de la lentille par une surface cylindrique appelée pied de biseau. Les pieds du biseau sont les parties sensiblement planes du chant de la lentille qui sont situées de part et d'autre des flancs avant et arrière du biseau.

Cependant, lorsque la lentille est fortement cambrée, il peut s'avérer utile pour favoriser l'emboîtement du biseau dans le drageoir du cercle correspondant de décaler en hauteur les pieds du biseau. Pour réaliser un tel décalage en hauteur des pieds du biseau, appelé détalonnage, il faut prévoir une meule de finition qui présente une différence spécifique de diamètre de part et d'autre de la gorge de nervurage. Lorsque l'on doit réaliser différentes hauteurs de détalonnage, il faut alors prévoir autant de meules de finition.

En outre, on observe, pour les lentilles fortement cambrées biseautées au moyen d'une meule de finition comportant une gorge de nervurage, que le biseau est partiellement rogné : il s'amincit sur les parties fortement cambrées du chant de la lentille. Cet amincissement du biseau pénalise la qualité et la précision du montage de la lentille dans sa monture.

Enfin, il arrive que le biseau ne s'emboîte dans le drageoir de la lentille que sur une certaine hauteur du biseau. En particulier, la partie basse du flanc du biseau tourné vers la face avant de la lentille n'est pas recouverte par le cercle de la monture. Il existe ainsi un certain espace visible entre le cercle de la monture et la face avant de la lentille, ce qui est inesthétique et est propice à un encrassement.

### OBJET DE L'INVENTION

Un but de la présente invention est de résoudre au moins un des problèmes cités ci-dessus.

À cet effet, l'invention propose une paire de lunettes ophtalmiques comportant :
- une monture pourvue d'au moins un cercle présentant un drageoir intérieur,
- une lentille montée dans ledit cercle, la lentille présentant une face avant, une face arrière et une nervure périphérique d'emboîtement présentant un flanc arrière situé du côté de la face arrière de la lentille et un flanc avant situé du côté de la face avant de la lentille, les flancs avant et arrière étant emboîtés dans le drageoir intérieur,
dans laquelle le flanc avant de la nervure périphérique d'emboîtement qui présente une continuité au moins de premier ordre avec le reste de la face avant, dans laquelle le chant de la lentille présente un pied ou épaulement arrière et dans laquelle la hauteur radiale de la nervure périphérique d'emboîtement, considérée entre le sommet de ladite nervure périphérique et le pied, varie le long de la périphérie de la lentille.

Par continuité de premier ordre, on entend que la partie périphérique meulée de la face avant de la lentille présente une arête commune avec le reste non meulé de la face avant. Il n'y a donc pas de décroché (ou marche) suivant la direction de l'axe de la lentille entre la face avant de la lentille et le flanc avant de la nervure d'emboîtement. Le flanc avant de la nervure périphérique est défini par la partie de la face avant de la lentille qui est emboîtée dans le drageoir et l'arête avant de la lentille constitue le sommet de la nervure périphérique d'emboîtement qui est emboîtée dans le drageoir. Il n'existe donc aucun pied de nervure (généralement appelé pied de biseau) formant un décroché entre la face avant de la lentille et le flanc avant de la nervure d'emboîtement.

Il en résulte qu'il n'existe pas d'espace visible entre l'intérieur du cercle et la face avant de la lentille et que le cercle de la monture est ainsi monté en affleurement de la face avant de la lentille. Ceci est favorable à l'esthétique du montage.

De plus, l'absence de pied de nervure entre la nervure et la face avant permet d'usiner le flanc arrière de la nervure avec un outil sans gorge et de ne pas usiner le flanc avant de la nervure ou d'usiner celui-ci avec un simple outil de chanfreinage ou équivalent, sans gorge. Ceci permet de résoudre ou de sensiblement atténuer le problème du rognage de la nervure pour les lentilles de forte base, c'est-à-dire fortement cambrées.

On résout enfin le problème du décalage en hauteur des pieds du biseau (détalonnage) puisqu'il suffit alors d'ajuster convenablement la hauteur (ou plus exactement le rayon) du pied de nervure arrière en pilotant en correspondance l'outil chargé de former le flanc et le pied arrière de la nervure d'emboîtement. Il n'est en particulier plus nécessaire de prévoir plusieurs outils à gorge avec des dénivelés de détalonnage différents.

L'invention trouve une invention particulièrement avantageuse dans le cas où la face avant de la lentille est inscrite dans une sphère approchante ayant un rayon inférieur à 12 cm (lentille fortement cambrée) et/ou dans le cas où le chant de la lentille détourée présente une épaisseur d'au moins 3 mm.

Selon une première caractéristique avantageuse de l'invention, la lentille présente une face avant dont la partie périphérique ne présente pas d'arrête de discontinuité au premier et second ordre résultant d'un meulage périphérique. Le flanc avant de la nervure périphérique d'emboîtement étant formé par la face avant de la lentille, le flanc avant n'a pas besoin d'être usiné. La formation de la nervure d'emboîtement est ainsi simplifiée. Le montage de la lentille dans le cercle est de plus esthétique.

Selon une autre caractéristique avantageuse de l'invention, la lentille présente une face avant dont la partie périphérique est meulée et est ainsi délimitée par une arrête de discontinuité de deuxième ordre. Par discontinuité de deuxième ordre, on entend une rupture de pentes entre la partie périphérique meulée de la face avant de la lentille et le reste non meulé de la face avant. Le flanc avant de la nervure périphérique présente ainsi une face de forme définie, typiquement conique, adaptée à une coopération d'emboîtement précise avec le drageoir de la monture. Lors du montage de la lentille dans le cercle correspondant, la nervure périphérique de la lentille est alors emboîtée dans le drageoir du cercle de manière plus précise et plus fiable. En outre, après montage, la lentille est avancée par rapport au cercle de monture dans lequel elle est montée, c'est-à-dire que la lentille est éloignée de l'oeil, ce qui rend le montage plus esthétique.

L'invention concerne également un procédé de formation d'une nervure périphérique d'emboîtement sur le chant d'une lentille montée rotative autour d'un premier axe de rotation, la nervure périphérique d'emboîtement présentant un flanc arrière situé du côté de la face arrière de la lentille et un flanc avant situé du côté de la face avant de la lentille, dans laquelle le procédé comporte :
a) la sélection manuelle ou automatique entre soit un premier outil d'usinage pourvu d'une gorge de nervurage, soit un deuxième outil d'usinage, dépourvu de gorge de nervurage et possédant une première face de travail qui est de révolution autour d'un deuxième axe de rotation et qui possède une génératrice inclinée, à tout instant en cours d'usinage, par rapport au premier axe de rotation,
b) l'étape conditionnelle suivante :
   - si le premier outil d'usinage est sélectionné, formation de la nervure périphérique d'emboîtement sur le chant de la lentille avec usinage des flancs avant et arrière de la nervure périphérique d'emboîtement par réplique de forme de la gorge de nervurage,
   - si le deuxième outil d'usinage est sélectionné, usinage du chant de la lentille au moyen de la première face de travail du deuxième outil d'usinage pour former le flanc arrière de la nervure périphérique d'emboîtement, le flanc avant de la nervure d'emboîtement étant formé sur une partie périphérique de la face avant de la lentille et présentant une continuité au moins de premier ordre avec le reste de la face avant, sans aucun usinage de cette partie périphérique ou avec un usinage de cette partie périphérique faisant apparaître une arrête de discontinuité de deuxième ordre.

Le procédé selon l'invention permet de choisir entre la formation d'une nervure d'emboîtement classique dont les deux flancs sont usinés et la formation d'une nervure périphérique d'emboîtement affleurant la face avant, sans pied de nervure (ou décroché) entre le flanc avant de la nervure d'emboîtement et la face avant.

Le fait que le second outil soit dépourvu de gorge et le fait de ne pas usiner le flanc avant de la nervure ou d'usiner celui-ci avec un simple outil de chanfreinage ou équivalent, également dépourvu de gorge, permet de s'affranchir d'un usinage par réplique de forme et de résoudre ou sensiblement atténuer le problème du rognage de la nervure pour les lentilles de forte base, c'est-à-dire fortement cambrées.

On résout aussi le problème du décalage en hauteur des pieds du biseau (détalonnage) puisqu'il suffit alors d'ajuster convenablement la hauteur (ou plus exactement le rayon) du pied de nervure arrière en pilotant en correspondance le second outil chargé de former le flanc et le pied arrière de la nervure d'emboîtement. Il n'est en particulier plus nécessaire de prévoir plusieurs outils à gorge avec des dénivelés de détalonnage différents.

En outre, le deuxième outil qui permet de mettre en oeuvre ce procédé peut présenter une structure simple puisqu'une seule face de travail inclinée suffit pour former le flanc arrière de la nervure périphérique. Ce deuxième outil peut également servir au chanfreinage.

Selon une caractéristique avantageuse de l'invention, la face avant de la lentille étant fictivement inscrite dans une sphère approchante, la sélection du deuxième outil d'usinage est réalisée si le rayon de la sphère est inférieur à 12 cm.

Le rognage de la nervure périphérique apparaît de manière particulièrement prononcée pour les lentilles dont la face avant possède une telle cambrure. L'utilisation du deuxième outil d'usinage permet de limiter le rognage de la nervure périphérique.

Selon une caractéristique avantageuse de l'invention, on réalise une simulation numérique de la formation de la nervure périphérique d'emboîtement avec le premier outil d'usinage et on sélectionne le deuxième outil d'usinage si la simulation numérique révèle un rognage de la nervure par rapport à la consigne, pour au moins une section transversale de la nervure, ce rognage étant supérieur à 10% sur la superficie de la section.

Selon un premier mode de réalisation, le chant de la lentille est usiné sur toute sa largeur par la première face de travail. Le flanc arrière de la nervure périphérique est ainsi formé par le chant de la lentille incliné par rapport à l'axe de la lentille. La nervure périphérique peut ainsi être formée au moyen d'une seule face de travail inclinée qui usine entièrement le chant de la lentille en biais, ce qui simplifie la formation de la nervure périphérique. Avantageusement alors, le deuxième outil d'usinage est une meule ou fraise d'usinage dont la première face de travail est cylindrique, le deuxième axe de rotation étant incliné par rapport au premier axe de rotation de la lentille.

Selon un second mode de réalisation, le deuxième outil d'usinage comportant une deuxième face de travail de révolution autour du même axe que la première face de travail, le deuxième outil d'usinage est agencé avec la lentille de telle sorte que la génératrice de travail de ladite deuxième face de travail soit, à tout instant en cours d'usinage, sensiblement parallèle au premier axe de rotation de la lentille, et en cas de sélection du deuxième outil d'usinage la partie restante de la largeur du chant de la lentille est usinée par la deuxième face de travail de manière à former un pied ou épaulement arrière de la nervure périphérique d'emboîtement de la lentille, ce pied arrière présentant une discontinuité de second ordre avec le flanc arrière de la nervure périphérique d'emboîtement.

Dans le cas où seule une partie de la largeur du chant est destinée à être emboîtée dans le drageoir de la monture, il est possible d'usiner l'autre partie du chant située du côté de la face arrière de la lentille de manière à former un pied de la nervure périphérique.

En particulier pour les lentilles épaisses, l'usinage de ce pied permet d'éviter d'enlever trop de matière du côté de la face arrière de la lentille par comparaison avec un usinage en biais de tout le chant de la lentille. Ainsi, l'aspect esthétique de la lentille est conservé.

En outre, lorsque la hauteur du pied à réaliser varie le long du chant de la lentille par rapport au sommet de la nervure, il est possible d'usiner à différentes hauteurs la partie du chant de la lentille située du côté de la face arrière de la lentille pour former ce pied.

Il est ainsi avantageusement possible de prévoir que la hauteur radiale de la nervure périphérique d'emboîtement, considérée entre le sommet de ladite nervure périphérique et le pied, varie le long de la périphérie de la lentille.

Selon une autre caractéristique avantageuse de l'invention, le deuxième outil d'usinage est une meule d'usinage dont la première face de travail est conique et dont la deuxième face de travail est cylindrique, le deuxième axe de rotation du deuxième outil d'usinage étant parallèle au premier axe de rotation de la lentille.

Un tel outil d'usinage est simple et peut également servir au chanfreinage de la lentille.

Selon un troisième mode de réalisation, le deuxième outil d'usinage comportant une deuxième face de travail de révolution, le deuxième outil d'usinage est agencé avec la lentille de telle sorte que la génératrice de travail de ladite deuxième face de travail est, à tout instant en cours d'usinage, moins inclinée que la génératrice de travail de la première face de travail par rapport au premier axe de rotation de la lentille, et en cas de sélection du deuxième outil d'usinage la partie restante de la largeur du chant de la lentille est usinée par la deuxième face de travail de manière à former un pied arrière de la nervure de la lentille, ce pied arrière présentant une discontinuité de second ordre avec le flanc arrière de la nervure périphérique d'emboîtement.

Avantageusement alors, comme pour le second mode de réalisation, il est avantageusement possible de prévoir que la hauteur radiale de la nervure périphérique d'emboîtement, considérée entre le sommet de ladite nervure périphérique et le pied, varie le long de la périphérie de la lentille.

Selon des variantes d'exécution :
- le deuxième outil d'usinage est une meule d'usinage dont la première face de travail est conique et dont la deuxième face de travail est cylindrique, le deuxième axe de rotation du deuxième outil d'usinage étant, pour l'usinage d'une partie au moins de la périphérie de la lentille, incliné par rapport au premier axe de rotation de la lentille ;
- le deuxième outil d'usinage est une meule ou fraise d'usinage dont les première et seconde faces de travail sont coniques.

Selon une autre caractéristique avantageuse de l'invention, le diamètre du deuxième outil d'usinage est inférieur au diamètre de la lentille.

L'utilisation d'un outil de faible diamètre pour la mise en oeuvre du procédé selon l'invention permet, lorsque la lentille présente un risque de rognage de la nervure périphérique, de former la nervure périphérique en limitant son rognage.

Selon une autre caractéristique avantageuse de l'invention, le diamètre du deuxième outil d'usinage est compris entre 5 et 25 mm.

Selon une autre caractéristique avantageuse de l'invention, si le deuxième outil d'usinage est sélectionné, on sélectionne également un troisième outil d'usinage possédant une troisième face de travail et on usine la partie périphérique de la face avant de la lentille au moyen de la troisième face de travail de telle sorte que la partie périphérique usinée de la face avant de la lentille forme le flanc avant de la nervure périphérique d'emboîtement.

Selon une autre caractéristique avantageuse de l'invention, le troisième outil d'usinage est confondu avec le deuxième outil d'usinage.

### DESCRIPTION DÉTAILLÉE D'UN EXEMPLE DE RÉALISATION

La description qui va suivre en regard des dessins annexés d'un mode de réalisation, donné à titre d'exemple non limitatif, fera bien comprendre en quoi consiste l'invention et comment elle peut être réalisée.

Dans les dessins annexés :
- la figure 1 est une vue en perspective d'un dispositif de détourage ;
- la figure 2 est une vue de côté d'une lentille et d'un outil d'usinage piloté pour former une nervure périphérique sur le chant de la lentille selon un premier mode de réalisation ;
- la figure 3 est une vue de côté de la lentille et de l'outil d'usinage piloté pour former une nervure périphérique sur le chant de la lentille selon un deuxième mode de réalisation ;
- la figure 4 est une vue de la lentille de la figure 2 montée dans un cercle d'une monture de lunettes ;
- la figure 5 est une vue de la lentille de la figure 3 montée dans un cercle d'une monture de lunettes ;
- la figure 6 est une vue de côté de la lentille et d'un autre outil d'usinage piloté pour usiner le flanc avant de la nervure périphérique selon un troisième mode de réalisation.

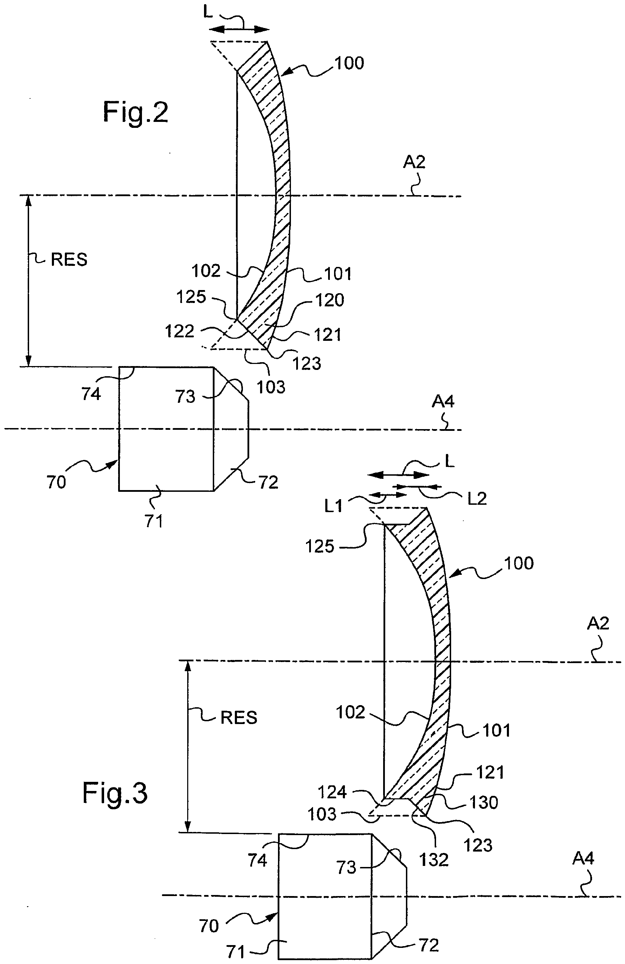

On rappelle tout d'abord qu'une lentille 100 ophtalmique possède une face avant 101 convexe et une face arrière 102 concave, ainsi qu'un chant 103 et deux arêtes avant 123 et arrière 125 à la jonction des faces avant 101 et arrière 102 avec le chant 103 (voir figures 2 et 3).

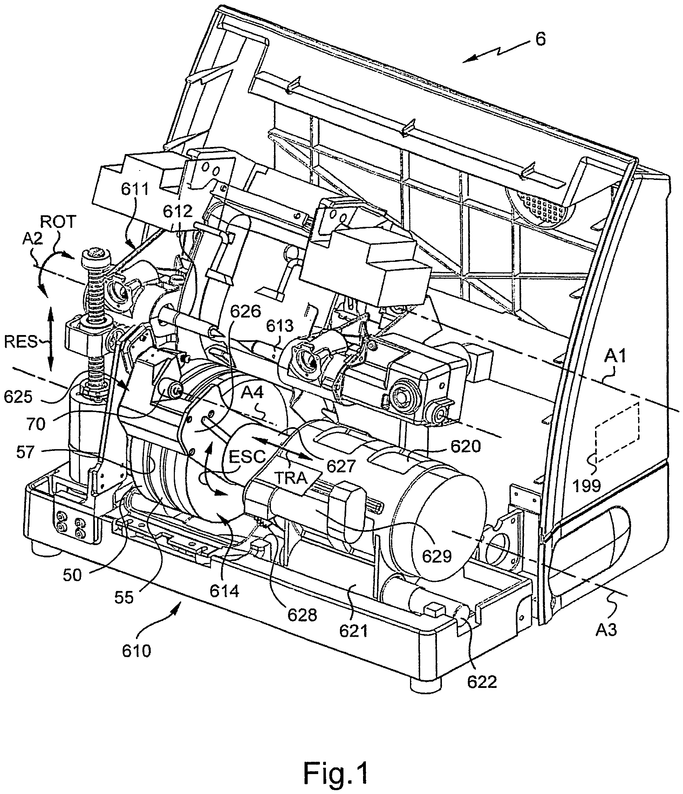

À la figure 1 on a représenté un dispositif de détourage 6 numérique adapté à modifier le contour de la lentille ophtalmique pour l'adapter à celui du cadre ou "cercle" d'une monture sélectionnée.

Ce dispositif comporte une bascule 611, qui est montée librement pivotante autour d'un premier axe A1, en pratique un axe horizontal, sur un châssis. Pour l'immobilisation et l'entraînement en rotation d'une lentille ophtalmique à usiner, la bascule 611 est équipée de moyens de support aptes à serrer et à entraîner en rotation une lentille ophtalmique 100. Ces moyens de support, ou moyens de maintien, comprennent deux arbres de serrage et d'entraînement en rotation 612, 613. Ces deux arbres 612, 613 sont alignés l'un avec l'autre suivant un deuxième axe A2, appelé axe de blocage, parallèle au premier axe A1. Les deux arbres 612, 613 sont entraînés en rotation de façon synchrone par un moteur (non représenté), via un mécanisme d'entraînement commun (non représenté) embarqué sur la bascule 611.

Chacun des arbres 612, 613 possède une extrémité libre qui fait face à l'autre et qui est conçue pour recevoir un nez de blocage (non représenté) de la lentille sur l'arbre 612, 613. L'arbre 613 est mobile en translation suivant l'axe de blocage A2, en regard de l'autre arbre 612, pour réaliser le serrage en compression axiale de la lentille entre les deux nez de blocage.

Le dispositif de détourage 6 comprend une meuleuse 610 qui comporte un train de plusieurs meules 614 montées coaxialement sur le troisième axe A3, pour un ébauchage et une finition du débordage de la lentille ophtalmique 100 à usiner.

Tel que schématisé sur la figure 1, le train de meules principales 614 comprend des meules cylindriques qui possèdent toutes un diamètre de l'ordre de 155 mm. Le train de meules principales 614 comprend une meule d'ébauche 50. La meule d'ébauche comprend une face de débordage dont la taille des grains de la surface d'ébauche est de l'ordre de 150 microns.

À côté de la meule d'ébauche 50, il est prévu une meule de finition 51 comprenant une face de débordage pourvue d'une gorge de nervurage 57. La meule de finition 55 possède un plus petit grain de l'ordre de 55 microns pour ramener avec une bonne précision le contour d'ébauche au contour final souhaité avec la formation d'une nervure périphérique qui constitue un biseau au sens traditionnel du terme pour l'homme du métier, c'est-à-dire une nervure comportant deux flancs usinés en V qui sont prolongés chacun par une partie sensiblement plane appelée pied de biseau. Cette nervure périphérique est destinée à être emboîtée dans le drageoir d'un cercle d'une monture.

Le train de meules est rapporté sur un arbre commun d'axe A3 assurant leur entraînement en rotation lors de l'opération de débordage. Cet arbre commun, qui n'est pas visible sur les figures présentées, est commandé en rotation par un moteur électrique 620.

Le train de meules 614 est en outre mobile en translation suivant l'axe A3 et est commandé dans cette translation par une motorisation pilotée. Concrètement, l'ensemble du train de meules 614, de son arbre et de son moteur est porté par un chariot 621 qui est lui-même monté sur des glissières 622 solidaires du bâti pour coulisser suivant le troisième axe A3. Le mouvement de translation du chariot porte-meules 621 est appelé « transfert » et est noté TRA sur la figure 1. Ce transfert est commandé par un mécanisme d'entraînement motorisé (non représenté), tel qu'un système à vis et écrou ou crémaillère.

Pour permettre un réglage dynamique de l'entraxe entre l'axe A3 des meules 614 et l'axe A2 de la lentille lors du débordage, on utilise la capacité de pivotement de la bascule 611 autour de l'axe A1. Ce pivotement provoque en effet un déplacement, ici sensiblement vertical, de la lentille 100 enserrée entre les arbres 612, 613 qui rapproche ou éloigne la lentille des meules 614. Cette mobilité, qui permet de restituer la forme de débordage (ou détourage) voulue est appelée restitution et est notée RES.

La meuleuse 610 illustrée par la figure 1 comporte de plus un module de finition 625 qui est pourvu d'un outil d'usinage 70 destiné à réaliser une nervure périphérique d'emboîtement, qui sert de biseau, et/ou un chanfrein sur le chant de la lentille 100 (voir figure 1).

Ici, l'outil d'usinage 70 est une meulette de finition qui comporte une face de travail 72 conique et une face de travail 71 cylindrique, toutes deux de révolution autour de l'axe A4.

L'axe de rotation A4 de l'outil d'usinage 70 est ici sensiblement parallèle à l'axe de rotation A2 de la lentille 100. La génératrice de travail 74 de la face de travail 71 cylindrique est ainsi, à tout instant en cours d'usinage, sensiblement parallèle à l'axe de rotation A2 de la lentille 100. On définit la génératrice de travail d'une face de travail comme étant la génératrice de la face de travail qui, lors de l'usinage de la lentille, est en contact avec le chant de la lentille.

Sur la figure 1 présentant le dispositif de détourage 6, la comparaison de la meulette de finition 70 avec les meules du train de meules 614 met en évidence que le diamètre de la meulette de finition est largement inférieur à celui des meules 50, 55 du train de meules principales 614. La meulette de finition 70 possède un diamètre maximum d'au plus 15 % de celui de la meule de finition 55. Ici, le diamètre de cette meulette de finition est de 25 mm. En variante, le diamètre de la meulette de finition peut être compris entre 5 à 25 mm.

La conicité de la face de travail 72 est telle qu'elle permet le chanfreinage de la face arrière 102 de la lentille 100. Autrement dit, à tout instant en cours d'usinage, l'intersection de la droite passant par la génératrice de travail 73 de la face de travail 72 avec l'axe de la lentille A2 est située, dans le plan passant par l'axe A2 de la lentille et l'axe A4 de rotation de la meulette de finition 70, du côté du centre de courbure de la face arrière 102 de la lentille 100 par rapport au plan moyen de la lentille 100.

Le module de travail 625 est mobile selon un degré de mobilité, suivant une direction sensiblement transversale à l'axe A2 des arbres 612, 613 de maintien de la lentille ainsi qu'à l'axe A5 de la restitution RES. Ce degré de mobilité est appelé escamotage et est noté ESC sur les figures.

En l'espèce, cet escamotage consiste en un pivotement du module de finition 625 autour de l'axe A3. Concrètement, le module 625 est porté par un levier 626 solidaire d'un manchon tubulaire 627 monté sur le chariot 621 pour pivoter autour de l'axe A3. Pour la commande de son pivotement, le manchon 627 est pourvu, à son extrémité opposée au levier 626, d'une roue dentée 628 qui engrène avec un pignon (non visible aux figures) équipant l'arbre d'un moteur électrique 629 solidaire du chariot 621.

Le dispositif de détourage 6 comprend une unité de traitement électronique et informatique 199 de pilotage des différents organes, consistant ici en une carte électronique conçue pour piloter en coordination les différentes mobilités des outils de travail et des moyens de serrage et d'entraînement en rotation de la lentille conformément au procédé de détourage automatisé qui sera exposé ultérieurement.

Le système électronique et informatique 199 comprend par exemple de façon classique une carte mère, un microprocesseur, une mémoire vive et une mémoire de masse permanente. La mémoire de masse contient un programme d'exécution du cycle d'usinage de chaque lentille selon un contour final souhaité. Cette mémoire de masse est de préférence réinscriptible et est avantageusement amovible pour permettre son remplacement rapide ou sa programmation sur un ordinateur distant via une interface de norme standard. Il est également prévu des moyens de mémorisation du contour final souhaité de la lentille, une interface utilisateur (par exemple un clavier et un écran), des moyens de communication avec un autre dispositif local ou distant, tel qu'un appareil de centrage, un appareil de lecture de contour ou un micro-ordinateur exécutant un logiciel d'assistance au métier de l'opticien ou optométriste.

Pour le détourage de la lentille 100 suivant le contour final souhaité, les mouvements de restitution RES de la bascule 611, de transfert TRA du train de meules 614, le mouvement d'escamotage ESC du module de finition 625 et le mouvement de rotation ROT des arbres 613, 612 de support de la lentille sont pilotés en coordination par le système électronique et informatique 199, dûment programmé à cet effet, pour que tous les points du contour de la lentille 100 soient successivement ramenés au bon rayon.

Dans ce contexte, le but général de l'invention est d'intégrer à cette meuleuse une fonction de finition du détourage du chant 103 de la lentille 100 ophtalmique comprenant la réalisation d'une nervure périphérique d'emboîtement 120 de géométrie maîtrisée.

Le cycle d'usinage exécuté comporte tout d'abord une étape d'ébauche de détourage de la lentille. Cette étape d'ébauche consiste à réaliser plusieurs passes d'usinage avec la meule d'ébauche 50 du train de meules 614 jusqu'à obtenir un contour d'ébauche sensiblement de même forme que le contour final souhaité, mais de taille légèrement plus grande. Cette meule d'ébauche 50 possède un gros grain qui permet d'enlever rapidement une importante quantité de matière de la lentille. Au cours de cette étape d'ébauche, le chant 103 de la lentille 100 est usiné à plat, pour présenter une tranche cylindrique, sans nervure périphérique.

Puis, on procède à l'étape de finition de débordage. Un test automatique ou une saisie manuelle est effectué afin de sélectionner soit la meule de finition 55 biseautée soit la meulette de finition 70. La meulette de finition 70 est notamment sélectionnée dans les cas suivants.

La meulette de finition 70 est sélectionnée lorsqu'il existe un risque que la partie basse du flanc avant de la nervure périphérique, dans l'hypothèse de sa réalisation avec la meule de finition 55 biseautée, ne soit pas recouverte par le drageoir de la lentille. Autrement dit, lorsqu'il existe un risque, après montage de la lentille dans le cercle correspondant, qu'un espace visible subsiste entre le flanc avant de la nervure périphérique et la face avant de la lentille.

La meulette de finition est également sélectionnée lorsque la lentille 100 présente un risque de rognage de la nervure périphérique à réaliser. Le risque de rognage existe si au moins l'un des deux cas suivants est rempli.

Selon un premier cas, le système électronique et informatique 199 détermine la sphère mathématique dans laquelle est fictivement inscrite la face avant 101 de la lentille 100. La sélection de la meulette de finition 70 est réalisée si le rayon de la sphère est inférieur à 12 cm et de préférence inférieur ou égal à 8 cm. En effet, une telle lentille est appelée lentille de forte base et présente un risque de rognage de la nervure périphérique avec la meule de finition 55 biseautée (habituellement utilisée). Selon un deuxième cas, le système électronique et informatique 199 réalise une simulation numérique de la formation de la nervure périphérique d'emboîtement avec la meule de finition 55 biseautée. Le système électronique et informatique 199 détermine alors le rognage de la nervure périphérique 120 à réaliser résultant de l'interférence avec la meule de finition 55 biseautée. La meulette de finition 70 est sélectionnée si la simulation numérique révèle un rognage de la nervure, pour au moins une section transversale de la nervure, ce rognage étant supérieur à 10%.

Ainsi, dans au moins un des cas cités ci-dessus, l'unité de traitement électronique 199 pilote le dispositif de détourage en sélectionnant la meulette de finition 70 puis en formant la nervure périphérique sur le chant de la lentille avec ladite meulette de finition 70, comme décrit ci-dessous.

Selon un premier mode de réalisation représenté à la figure 2, on chanfreine la périphérie de la face arrière 102 de la lentille.

A cet effet, le système de traitement électronique 199 est programmé pour piloter en coordination appropriée les mobilités de transfert TRA du module de travail 625 portant la meulette de finition 70, de restitution RES des arbres de serrage et d'entraînement en rotation 612, 613, d'escamotage ESC du module de travail 625 et de rotation ROT de la lentille pour positionner la face de travail 72 conique de la meule d'usinage 70 en vis-à-vis du chant 103 de la lentille.

La meulette de finition 70 est alors déplacée relativement à la lentille 100 de telle sorte que le chant 103 de la lentille 100 soit usiné en biais par rapport à l'axe de rotation A4 de la lentille.

Le chant 103 de la lentille 100 est usiné sur toute sa largeur L par la génératrice de travail 73 de la face de travail 72 conique. Le chanfrein de la périphérie de la face arrière 102 de la lentille ainsi réalisé forme le flanc arrière 122 de la nervure périphérique 120 et la partie périphérique 121 de la face avant 101 forme le flanc avant 121 de cette nervure périphérique 120. L'arête avant 123 forme le sommet 123 de la nervure périphérique 120.

Ainsi, la partie périphérique 121 de la face avant 101 de la lentille ne comporte pas de facettes. Autrement dit, la partie périphérique 121 de la face avant de la lentille ne présente pas de discontinuité du second ordre, c'est-à-dire de discontinuité de pente de sa surface. Bien entendu la lentille peut comporter une pastille de vision de près ; mais une telle pastille n'affecte pas la périphérie de la lentille et n'est pas considérée ici comme une facette.

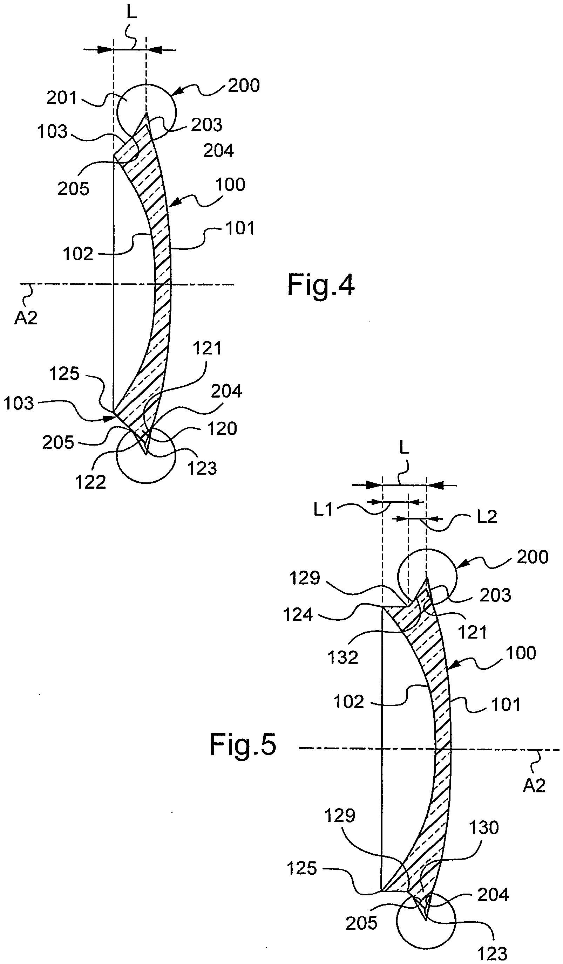

Comme représenté sur la figure 4, la lentille 100 est montée par emboîtement, ou encliquetage, dans un cercle 201 d'une monture 200. À cet effet le cercle 201 comporte un drageoir 203 qui présente une arête avant 204 et une arête arrière 205 qui prennent appui contre respectivement les flancs avant 121 et arrière 122 de la nervure périphérique d'emboîtement 120.

Le chant de la lentille 100 est usiné avec une inclinaison suffisante de manière à obtenir un angle au sommet 123 de la nervure périphérique 120 suffisamment aigu pour que la nervure périphérique 120 ainsi formée puisse être engagée dans le drageoir 203.

Selon un deuxième mode de réalisation (figure 3) appliqué préférentiellement aux lentilles épaisses, une partie L2 seulement de la largeur L du chant de la lentille est usinée avec la face de travail 72 conique de la meulette de finition 70. Cette partie L2 usinée de la largeur L du chant est celle située du côté de la face avant 101 de la lentille.

L'usinage de cette partie L2 de la largeur L du chant usinée avec la face de travail 72 conique permet de former un flanc arrière 132 d'une nervure périphérique 130.

La partie restante L1 de la largeur L du chant 103 de la lentille 100 est usinée par la face de travail 71 cylindrique de manière à former un pied arrière 124 de la nervure périphérique 130 de la lentille 100.

À cet effet, le déplacement de la meulette de finition 70 est piloté de manière à, d'une part, mettre en contact la face de travail 71 cylindrique de la meulette de finition 70 avec la partie restante L1 de la largeur L du chant 103 de la lentille et, d'autre part, mettre en contact la face de travail 72 conique de la meulette de finition 70 avec la partie L2 de la largeur L du chant 103 de la lentille.

Le chant 103 de la lentille 100 présente ainsi une ligne de discontinuité 129 de second ordre sur sa largeur L de sorte que la partie L1 de la largeur du chant 103 située entre la face arrière 102 et la discontinuité forme le pied arrière 124 de la nervure périphérique 130 et la partie L2 de sa largeur L restante forme le flanc arrière 132 de la nervure périphérique 130.

Comme représenté sur la figure 5 et de manière similaire au premier mode de réalisation, lors du montage de la lentille 100 dans le cercle 201 de la monture 200, les arêtes avant 204 et arrière 205 du drageoir 203 prennent appui contre respectivement les flancs avant 121 et arrière 132 de la nervure périphérique d'emboîtement 130.

Cette solution est principalement esthétique et vise à ne pas enlever trop de matières sur la partie du chant de la lentille tournée vers la face arrière de la lentille. En particulier pour une lentille épaisse, l'aspect esthétique de la lentille est ainsi conservé.

La meulette de finition est également sélectionnée pour la mise en oeuvre de ce deuxième mode de réalisation représenté aux figures 3 et 5 lorsque l'on souhaite usiner le pied arrière 124 de la nervure périphérique 130 à différentes hauteurs par rapport au sommet 123 de la nervure, c'est-à-dire ici l'arête avant 123 de la lentille. La meulette de finition est alors pilotée au cours de l'opération d'usinage pour que la hauteur radiale de la nervure périphérique 130, c'est-à-dire la distance suivant une direction radiale de la lentille entre le sommet de la nervure périphérique 130 et le pied 124, varie le long de la périphérie de la lentille et donc en fonction de l'angle de rotation de la lentille.

La variation de la hauteur du pied arrière de la nervure périphérique est adaptée à la configuration du drageoir. Notamment, la variation de la hauteur du pied arrière permet de prendre en compte le vrillage, ou versage, du drageoir qui génère un décalage de hauteur de ses parties d'appui sur les flancs de la nervure d'emboîtement. Le montage de la nervure dans le drageoir est ainsi plus fiable et plus esthétique.

Plus précisément, cette hauteur de nervure est donnée par une fonction non entièrement uniforme de la position du plan de section axiale considéré le long du chant de la lentille. La nervure 130 est usinée selon des consignes axiale et radiale de forme donnant respectivement, en fonction de la position du plan de section axiale considéré de la lentille, les positions axiale et radiale de la trace d'un brin longitudinal directeur de cette nervure d'emboîtement dans cette section axiale. La fonction donnant la hauteur de la nervure 130 incorpore au moins l'une des consignes radiale et axiale de forme du brin longitudinal directeur en la section axiale considérée (c'est-à-dire en cours d'usinage) le long de la périphérie de la lentille.

La fonction donnant la hauteur de la nervure 130 comporte un paramètre caractéristique de la forme globale de l'une des faces optiques de la lentille ou d'un brin longitudinal du drageoir du cercle de la monture. Ce paramètre peut par exemple consister en un rayon d'une base sphérique approchant la forme de la lentille ou d'un brin longitudinal du drageoir du cercle de la monture.

La fonction donnant la hauteur de la nervure 130 comporte également un paramètre qui est déduit des consignes de forme radiale et axiale du brin longitudinal directeur de la nervure d'emboîtement 130.

La fonction donnant la hauteur de la nervure 130 comporte encore un paramètre dépendant de la géométrie du profil du drageoir du cercle de la monture acquise par palpage avec ou sans contact du drageoir en au moins une section transversale du cercle.

La présente invention peut être modifiée comme exposé ci dessous, sans s'étendre au delà de la portée définie par les revendications.

En variante, il est possible dans le cadre du premier et du deuxième mode de réalisation d'incliner l'axe A4 de la meulette de finition 70 pour modifier l'angle au sommet de la nervure périphérique.

La meule de finition 55 du train de meules principales 614 est utilisée pour effectuer une finition sur les autres types de lentilles ophtalmiques en usinant les flancs avant et arrière de la nervure périphérique d'emboîtement sur le chant de la lentille au moyen de la gorge de nervurage 57.

En variante du deuxième mode de réalisation, on peut prévoir d'incliner l'axe de rotation de l'outil d'usinage de telle sorte que la face cylindrique de l'outil d'usinage soit apte à chanfreiner l'arête arrière de la lentille. Il est ainsi possible d'usiner le chant de la lentille de telle sorte que l'inclinaison du chant de la lentille soit adaptée à la cambrure de la lentille de manière à faciliter le maintien de la lentille dans le cercle de la monture.

On peut prévoir que l'inclinaison de l'outil d'usinage soit fixe, auquel cas on choisit un angle moyen qui convient à la majorité des lentilles, ou encore on peut prévoir que le module de finition soit conçu de manière à permettre le pilotage de l'angle d'inclinaison de l'axe de rotation de l'outil d'usinage.

En variante du deuxième mode de réalisation, l'outil d'usinage utilisé pour réaliser le pied de la nervure périphérique peut être distinct et différent de l'outil d'usinage qui permet d'usiner le flanc arrière de la nervure périphérique.

En variante du premier mode de réalisation, l'outil d'usinage peut être une meulette ou fraise d'usinage dont la face de travail est entièrement cylindrique. L'outil d'usinage est alors agencé avec le module de finition de telle sorte que son axe de rotation soit incliné par rapport à l'axe de la lentille.

Ainsi la génératrice de travail de la face de travail de l'outil d'usinage est inclinée par rapport à la génératrice du chant de la lentille. Le déplacement de l'outil d'usinage est alors piloté de manière à usiner entièrement le chant de lentille pour réaliser le flanc arrière de la nervure périphérique.

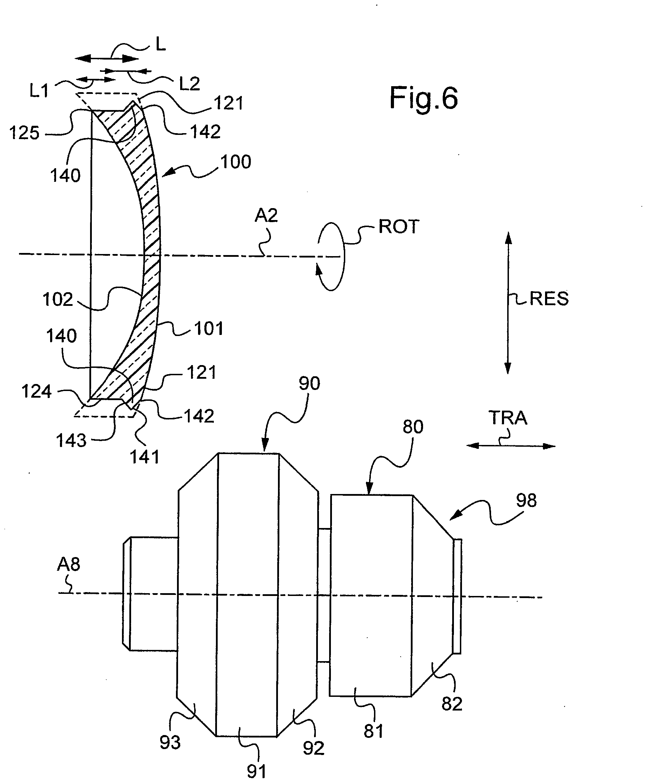

Il est décrit ci-dessous, en référence à la figure 6, un troisième mode de réalisation qui peut être combiné aux premier (figures 2 et 4) et deuxième (figures 3 et 5) modes de réalisation décrits précédemment.

Dans ce troisième mode de réalisation, comme représenté sur la figure 6, il est prévu de rajouter un train d'outils 98 qui est monté sur le module de finition 625. Ce train d'outils 98 comporte une meulette de finition 80 et une meulette de polissage 90. Ces deux meulettes sont montées sur un même arbre d'entraînement en rotation (non représenté) d'axe A8.

La meulette de finition 80 comporte une face de travail cylindrique 81 et une face de travail conique 82 dont la normale en un point de cette face est dirigée à l'opposé du centre de courbure de la lentille 100. Les faces de travail conique 82 et cylindrique 81 de cette meulette de finition rigide 80 sont utilisées de la même manière que les faces de travail correspondantes de la meulette 70 prévue dans les premier et deuxième modes de réalisation (figures 2 à 5) pour former le flanc arrière 143 et/ou le pied arrière 124 d'une nervure périphérique d'emboîtement 140.

La meulette de polissage 90 comporte une face de travail cylindrique 91 centrale et, de part et d'autre de cette face de travail cylindrique 91, deux faces de travail coniques 92, 93 opposées. Les faces de travail coniques 92, 93 de cette meule de polissage sont utilisées pour réaliser un chanfrein poli sur les arêtes des faces avant et arrière de la lentille, et la face de travail cylindrique 91 centrale permet de polir le pied arrière 124 s'étendant parallèlement à l'axe A8 entre le flanc arrière 143 et la face arrière 102. La normale en un point de la face de travail conique 93 est dirigée vers le centre de courbure de la lentille 100. Cette face de travail conique 93 est ainsi convenablement orientée pour usiner la face avant 101 de la lentille.

Selon ce troisième mode de réalisation, le pied arrière 124 et le flanc arrière 143 sont usinés comme décrit précédemment et, de plus, la partie périphérique 121 de la face avant 101 de la lentille est usinée par la face de travail conique 93 de la meulette de polissage 90 de manière à présenter une facette 141 inclinée qui forme le flanc avant 141 de la nervure périphérique 140.

Les mobilités de restitution RES et de rotation ROT de la lentille, ainsi que la mobilité de transfert TRA de la meulette de polissage 90 sont pilotées conjointement pour usiner la partie périphérique 121 de la lentille et former ainsi le flanc avant 141 usiné de la nervure périphérique 140. On forme ainsi sur la partie périphérique 121 de la face avant 101 de la lentille une discontinuité 142 du deuxième ordre.

Lors du montage de la lentille dans le cercle correspondant, la nervure périphérique de la lentille est emboîtée dans le drageoir du cercle de manière plus fiable et précise. En effet, le flanc avant conique 141 de la nervure périphérique 140 est adapté à venir convenablement au contact du drageoir. En outre, grâce à un tel usinage de la partie périphérique de la face avant de la lentille, la lentille est avancée par rapport au cercle correspondant dans lequel elle est montée, c'est-à-dire que la lentille est éloignée de l'oeil, ce qui rend le montage plus esthétique.

En variante, on peut prévoir que l'arbre sur lequel sont montées les deux meulettes 80, 90 possède également une mobilité de pivotement autour d'un axe transversal au plan vertical passant par l'axe A2 de la lentille, c'est-à-dire le plan de la figure 6. Cette mobilité de pivotement peut être pilotée de manière à obtenir l'inclinaison souhaitée du flanc avant 141 de la nervure périphérique.

## Revendications

1. Paire de lunettes ophtalmiques comportant :
- une monture (200) pourvue d'au moins un cercle (201) présentant un drageoir intérieur (203),
- une lentille (100) montée dans ledit cercle (201), la lentille (100) présentant une face avant (101), une face arrière (102) et, sur son chant, une nervure périphérique d'emboîtement (120 ; 130) présentant un flanc arrière (122 ; 132) situé du côté de la face arrière (102) de la lentille (100) et un flanc avant (121) situé du côté de la face avant (101) de la lentille, les flancs avant et arrière (121, 122 ; 132) étant emboîtés dans le drageoir intérieur (203),
le flanc avant (121) de la nervure périphérique d'emboîtement (130) présente une continuité au moins de premier ordre avec le reste de la face avant, et le chant de la lentille présente un pied ou épaulement arrière (124), **caractérisée en ce que** la hauteur radiale de la nervure périphérique d'emboîtement (130), considérée entre le sommet de ladite nervure périphérique et le pied (124), varie le long de la périphérie de la lentille.

2. Paire de lunettes ophtalmiques selon la revendication précédente, dans laquelle la face avant (101) de la lentille (100) est inscrite dans une sphère approchante ayant un rayon inférieur à 12 cm.

3. Paire de lunettes ophtalmiques selon l'une des revendications précédentes, dans laquelle le chant de la lentille détourée présente une épaisseur d'au moins 3 mm.

4. Paire de lunettes ophtalmiques selon l'une des revendications précédentes, dans laquelle la lentille (100) présente une face avant (101) dont la partie périphérique (121) ne présente pas d'arrête de discontinuité au premier et second ordres résultant d'un meulage périphérique.

5. Paire de lunettes ophtalmiques selon l'une des revendications 1 à 3, dans laquelle une partie périphérique de la face avant (101) de la lentille (100) est meulée et est ainsi délimitée par une arrête (142) de discontinuité du deuxième ordre.

6. Procédé de formation d'une nervure périphérique d'emboîtement (120 ; 130) sur le chant (103) d'une lentille (100) montée rotative autour d'un premier axe de rotation (A2), la nervure périphérique d'emboîtement (120 ; 130) présentant un flanc arrière (122 ; 132) situé du côté de la face arrière (102) de la lentille (100) et un flanc avant (121) situé du côté de la face avant (101) de la lentille, **caractérisé en ce que** le procédé comporte :
a) la sélection manuelle ou automatique entre, soit un premier outil d'usinage (55) pourvu d'une gorge de nervurage (57), soit un deuxième outil d'usinage (70) dépourvu de gorge de biseautage et possédant une première face de travail (72) qui est de révolution autour d'un deuxième axe de rotation (A4) et qui possède une génératrice de travail (73) inclinée, à tout instant en cours d'usinage, par rapport au premier axe de rotation (A2),
b) l'étape conditionnelle suivante :
- si le premier outil d'usinage (55) est sélectionné, formation de la nervure périphérique d'emboîtement sur le chant de la lentille au moyen du premier outil d'usinage (55), avec usinage des flancs avant et arrière de la nervure périphérique d'emboîtement sur le chant de la lentille par réplique de forme de la gorge de nervurage (57),
- si le deuxième outil d'usinage (70) est sélectionné, usinage du chant (103) de la lentille (100) au moyen de la première face de travail (72) du deuxième outil d'usinage (70) pour former le flanc arrière (122 ; 132) de la nervure périphérique d'emboîtement (120 ; 130), le flanc avant (121) de la nervure périphérique d'emboîtement (120 ; 130) étant formé sur une partie périphérique (121) de la face avant (101) de la lentille et présentant une continuité au moins de premier ordre avec le reste de la face avant, sans aucun usinage de cette partie périphérique ou avec un usinage de cette partie périphérique faisant apparaître une arrête (142) de discontinuité de deuxième ordre.

7. Procédé selon la revendication précédente, dans lequel, la face avant (101) de la lentille (100) étant inscrite dans une sphère approchante, la sélection du deuxième outil d'usinage (70) est réalisée si le rayon de la sphère est inférieur à 12 cm.

8. Procédé selon l'une des revendications 6 et 7, dans lequel on réalise une simulation numérique de la formation de la nervure périphérique d'emboîtement avec le premier outil d'usinage (55) et en ce qu'on sélectionne le deuxième outil d'usinage (70) si la simulation numérique révèle un rognage de la nervure par rapport à la consigne, pour au moins une section transversale de la nervure, ce rognage étant supérieur à 10% sur la superficie de la section.

9. Procédé selon l'une des revendications 6 à 8, dans lequel le chant (103) de la lentille (100) est usiné sur toute sa largeur (L) par la première face de travail (72).

10. Procédé selon la revendication 9, dans lequel le deuxième outil d'usinage est une meule ou fraise d'usinage dont la première face de travail est cylindrique, le deuxième axe de rotation étant incliné par rapport au premier axe de rotation de la lentille.

11. Procédé selon l'une des revendications 6 à 8, dans lequel, le deuxième outil d'usinage (70) comportant une deuxième face de travail (71) de révolution autour du même axe que la première face de travail (72), le deuxième outil d'usinage (70) est agencé avec la lentille (100) de telle sorte que la génératrice de travail (74) de ladite deuxième face de travail (71) soit, à tout instant en cours d'usinage, sensiblement parallèle au premier axe de rotation (A2) de la lentille (100), et en ce qu'en cas de sélection du deuxième outil d'usinage (70), la partie restante (L1) de la largeur (L) du chant (103) de la lentille (100) est usinée par la deuxième face de travail (71) de manière à former un pied ou épaulement arrière (124) de la nervure périphérique d'emboîtement (130) de la lentille (100), ce pied arrière (124) présentant une discontinuité de second ordre avec le flanc arrière (132) de la nervure périphérique d'emboîtement (130).

12. Procédé selon la revendication 11, dans lequel la hauteur radiale de la nervure périphérique d'emboîtement (120 ; 130), considérée entre le sommet de ladite nervure périphérique et le pied (124), varie le long de la périphérie de la lentille.

13. Procédé selon l'une des revendications 11 et 12, dans lequel le deuxième outil d'usinage (70) est une meule d'usinage dont la première face de travail (72) est conique et dont la deuxième face de travail (71) est cylindrique, le deuxième axe de rotation (A4) du deuxième outil d'usinage (70) étant parallèle au premier axe de rotation (A2) de la lentille (100).

14. Procédé selon l'une des revendications 6 à 8, dans lequel, le deuxième outil d'usinage (70) comportant une deuxième face de travail (71) de révolution, le deuxième outil d'usinage (70) est agencé avec la lentille (100) de telle sorte que la génératrice de travail (74) de ladite deuxième face de travail (71) est, à tout instant en cours d'usinage, moins inclinée que la génératrice de travail (73) de la première face de travail (72) par rapport au premier axe de rotation (A2) de la lentille (100), et en ce qu'en cas de sélection du deuxième outil d'usinage (70) la partie restante (L1) de la largeur (L) du chant (103) de la lentille (100) est usinée par la deuxième face de travail (71) de manière à former un pied arrière (124) de la nervure périphérique d'emboîtement (130) de la lentille (100).

15. Procédé selon la revendication 14, dans lequel la hauteur radiale de la nervure périphérique d'emboîtement (120 ; 130), considérée entre le sommet de ladite nervure périphérique et le pied (124), varie le long de la périphérie de la lentille.

16. Procédé selon l'une des revendications 14 et 15, dans lequel le deuxième outil d'usinage (70) est une meule d'usinage dont la première face de travail (72) est conique et dont la deuxième face de travail (71) est cylindrique, le deuxième axe de rotation (A4) du deuxième outil d'usinage (70) étant, pour l'usinage d'une partie au moins de la périphérie de la lentille, incliné par rapport au premier axe de rotation (A2) de la lentille (100).

17. Procédé selon l'une des revendications 14 et 15, dans lequel le deuxième outil d'usinage est une meule ou fraise d'usinage dont les première et seconde faces de travail sont coniques.

18. Procédé selon l'une des revendications 6 à 17, dans lequel le diamètre du deuxième outil d'usinage (70) est inférieur au diamètre de la lentille (100).

19. Procédé selon l'une des revendications 6 à 17, dans lequel le diamètre du deuxième outil d'usinage (70) est compris entre 5 et 25 mm.

20. Procédé selon l'une des revendications 6 à 17, dans lequel, si le deuxième outil d'usinage (70) est sélectionné, on sélectionne également un troisième outil d'usinage (90) possédant une troisième face de travail (93) et on usine la partie périphérique (121) de la face avant (101) de la lentille au moyen de la troisième face de travail (93) de telle sorte que la partie périphérique meulée (121) de la face avant (101) de la lentille (100) forme le flanc avant (141) de la nervure périphérique d'emboîtement.

21. Procédé selon la revendication précédente, dans lequel le troisième outil d'usinage est confondu avec le deuxième outil d'usinage.

## Claims

1. A pair of ophthalmic eyeglasses comprising:
· a frame (200) provided with at least one rim (201) presenting an internal bezel (203); and
· a lens (100) mounted in said frame (201), the lens (100) presenting a front face (101), a rear face (102), and on its edge face, an engagement peripheral ridge (120; 130) presenting a rear flank (122; 132), situated beside the rear face (101) of the lens (100) and a front flank (121) situated beside the front face (101) of the lens, the front and rear flanks (121, 122; 132) being engaged in the internal bezel (203);
wherein the front flank (121) of the engagement peripheral ridge (130) presents continuity of at least first order with the remainder of the front face, and wherein the edge face of the lens presents a rear shoulder or foot (124),
the pair of eyeglasses being **characterized in that** the radial height of the engagement peripheral ridge (130) considered between the peak of said peripheral ridge and the foot (124) varies along the periphery of the lens.

2. A pair of ophthalmic eyeglasses according to the preceding claim, wherein the front face (101) of the lens (100) is inscribed in an approximating sphere of radius less than 12 cm.

3. A pair of ophthalmic eyeglasses according to any preceding claim, wherein the edge face of the shaped lens presents a thickness of at least 3 mm.

4. A pair of ophthalmic eyeglasses according to any preceding claim, wherein the lens (100) presents a front face (101) in which the peripheral portion (121) does not present any edge of first-order or second-order discontinuity as a result of peripheral grinding.

5. A pair of ophthalmic eyeglasses according to any one of claims 1 to 3, wherein a peripheral portion of the front face (101) of the lens (100) is ground and is thus defined by an edge (142) presenting discontinuity of second order.

6. A method of forming an engagement peripheral ridge (120; 130) on the edge face (103) of a lens (100) mounted to rotate about a first axis of rotation (A2), the engagement peripheral ridge (120; 130) presenting a rear flank (122; 132) situated beside the rear face (102) of the lens (100) and a front flank (121) situated beside the front face (101) of the lens, the method being **characterized in that** it comprises:
a) manually or automatically selecting either a first machining tool (55) provided with a ridging groove (57) or a second machining tool (70) provided without ridging groove and presenting a first working face (72) that is a surface of revolution about a second axis of rotation (A4) and that possesses a working generator line (73) that is inclined at all instants during machining relative to the first axis of rotation (A2); and
b) the following conditional step:
· if the first working tool (55) is selected, forming the engagement peripheral ridge on the edge face of the lens with the first working tool (55), the front and rear flanks of the engagement peripheral ridge being machined on the edge face of the lens by reproducing the shape of the ridging groove (75); or
· if the second machining tool (70) is selected, machining the edge face (103) of the lens (100) by means of the first working face (72) of the second machining tool (70) to form the rear flank (122; 132) of the engagement peripheral ridge (120; 130), the front flank (121) of the engagement peripheral ridge (120; 130) being formed on a peripheral portion (121) of the front face (101) of the lens and presenting continuity of at least first order with the remainder of the front face, without any machining of said peripheral portion or with machining of said peripheral portion causing an edge (142) to appear presenting discontinuity of second order.

7. A method according to the preceding claim, wherein, for the front face (101) of the lens (100) being inscribed in an approximating sphere, the second machining tool (70) is selected if the radius of the sphere is less than 12 cm.

8. A method according to claim 6 or claim 7, wherein the formation of the engagement peripheral ridge by means of the first machining tool (55) is simulated numerically, and the second machining tool (70) is selected if the numerical simulation reveals that the ridge is pared away from its setpoint in at least one cross-section of the ridge, with said paring-away being greater than 10% of the area of the section.

9. A method according to any one of claims 6 to 8, wherein the edge face (103) of the lens (100) is machined over the entire width (L) by the first working face (72).

10. A method according to claim 9, wherein the second machining tool is a machining cutter or wheel with its first working face being cylindrical, the second axis of rotation being inclined relative to the first axis of rotation for the lens.

11. A method according to any one of claims 6 to 8, wherein the second machining tool (70) has a second working face (71) forming a surface of revolution about the same axis as the first working face (72), the second machining tool (70) being arranged relative to the lens (100) in such a manner that, at all times during machining, the working generator line (74) of said second working face (71) is substantially parallel to the first axis of rotation (A2) for the lens (100), and in that in the event of the second machining tool (70) being selected, the remaining portion (L1) of the width (L) of the edge face (103) of the lens (100) is machined by the second working face (71) so as to form a rear shoulder or foot (124) for the engagement peripheral ridge (130) of the lens (100), said rear foot (124) presenting discontinuity of second order with the rear flank (132) of the engagement peripheral ridge (130).

12. A method according to claim 11, wherein the radial height of the engagement peripheral ridge (120; 130) considered between the peak of said peripheral ridge and the foot (124) varies along the periphery of the lens.

13. A method according to claim 11 or claim 12, wherein the second machining tool (70) is a machining wheel in which the first working face (72) is conical and the second working face (71) is cylindrical, the second axis of rotation (A4) for the second machining tool (70) being parallel to the first axis of rotation (A2) for the lens (100).

14. A method according to any one of claims 6 to 8, wherein the second machining tool (70) has a second working face (71) forming a surface of revolution, the second machining tool (72) being arranged relative to the lens (100) in such a manner that the working generator line (74) of said second working face (71) is, at all times during machining, less inclined than the working generator line (73) of the first working face (72) relative to the first axis of rotation (A2) for the lens (100), and in that in the event of the second machining tool (70) being selected, the remaining portion (L1) of the width (L) of the edge face (103) of the lens (100) is machined by the second working face (71) in such a manner as to form a rear foot (124) of the engagement peripheral ridge (130) of the lens (100).

15. A method according to claim 14, wherein the radial height of the engagement peripheral ridge (120; 130) taken between the peak of said peripheral ridge and the foot (124) varies along the periphery of the lens.

16. A method according to claim 14 or claim 15, wherein the second machining tool (70) is a machining wheel in which the first working face (72) is conical and the second working face (71) is cylindrical, and while machining at least a portion of the periphery of the lens, the second axis of rotation (A4) for the second machining tool (70) being inclined relative to the first axis of rotation (A2) for the lens (100).

17. A method according to claim 14 or claim 15, wherein the second machining tool is a machining cutter or wheel in which the first and second working faces are conical.

18. A method according to any one of claims 6 to 17, wherein the diameter of the second machining tool (70) is less than the diameter of the lens (100).

19. A method according to any one of claims 6 to 17, wherein the diameter of the second machining tool (70) lies in the range 5 mm to 25 mm.

20. A method according to any one of claims 6 to 17, wherein, if the second machining tool (70) is selected, then a third machining tool (90) is also selected that possesses a third working face (93) and the peripheral portion (121) of the front face (101) of the lens is machined by means of the third working face (93) in such a manner that the machined peripheral portion (121) of the front face (101) of the lens (100) forms the front flank (141) of the engagement peripheral ridge.

21. A method according to the preceding claim, wherein the third machining tool is the same as the second machining tool.

## Patentansprüche

1. Korrektionsbrille mit:
- einer Brillenfassung (200), die mit mindestens einer Umrandung (201) mit einem Innenring (203) versehen ist,
- einem in die Umrandung (201) montierten Brillenglas (100) mit einer Vorderseite (101), einer Rückseite (102) und an seiner Kante eine periphere Rippe (120, 130) zum Einpassen mit einer Rückflanke (122; 132) an der Rückseite (102) des Brillenglases (100) und einer Vorderflanke (121) an der Vorderseite (101) des Brillenglases, wobei die Vorder- und Rückflanken (121; 122; 132) in den Innenring (203) eingepasst sind,
die Vorderflanke (121) der peripheren Einpassrippe (130) weist eine Kontinuität mindestens ersten Ranges zum Rest der Vorderseite auf, und die Kante des Brillenglases weist einen Sockel oder hinteren Bund (124) auf, **dadurch gekennzeichnet, dass** die radiale Höhe der peripheren Einpassrippe (130), wenn man sie zwischen dem höchsten Punkt dieser peripheren Rippe und dem Sockel (124) betrachtet, entlang des Brillenglasrandes variiert.

2. Korrektionsbrille nach vorausgehendem Anspruch, bei der die Vorderseite (101) des Brillenglases (100) in einer annähernden Sphäre mit einem Radius von unter 12 cm enthalten ist.

3. Korrektionsbrille nach einem der vorausgehenden Ansprüche, bei der die Kante des zugeschnittenen Brillenglases eine Stärke von mindestens 3 mm aufweist.

4. Korrektionsbrille nach einem der vorausgehenden Ansprüche, bei der das Brillenglas (100) eine Vorderseite (101) aufweist, deren peripherer Teil (121) keine Diskontinuitätskante ersten und zweiten Ranges aufweist, die auf ein Abschleifen des Randes zurückzuführen ist.

5. Korrektionsbrille nach einem der Ansprüche 1 bis 3, bei der ein peripherer Teil der Vorderseite (101) des Brillenglases (100) abgeschliffen und dadurch durch eine Diskontinuitätskante (142) zweiten Ranges abgegrenzt ist.

6. Einarbeitungsverfahren einer peripheren Einpassrippe (120, 130) an der Kante (103) eines Brillenglases (100), das um erste Drehachse (A2) drehend montiert ist, wobei die periphere Einpassrippe (120, 130) eine hintere Flanke (122, 132) an der Rückseite (102) des Brillenglases (100) und eine vordere Flanke (121) an der Vorderseite (101) des Brillenglases aufweist, **dadurch gekennzeichnet, dass** das Verfahren umfasst:
a) die manuelle oder automatische Auswahl zwischen einem ersten Bearbeitungswerkzeug (55) mit einer Rillennute (57) und einem zweiten Bearbeitungswerkzeug (70) ohne Facettierungsnute und mit einer ersten Arbeitsseite (72), die sich um eine zweite Rotationsachse (A4) dreht und ein Arbeitsaggregat (73) besitzt, das zu jedem Zeitpunkt der Bearbeitung in Bezug zur ersten Rotationsachse (A2) geneigt ist,
b) folgende bedingte Etappe:
- wenn das erste Bearbeitungswerkzeug (55) ausgewählt wurde, Einarbeiten der peripheren Einpassrippe an der Kante des Brillenglases mittels dem ersten Bearbeitungswerkzeug (55), mit Bearbeiten der vorderen und hinteren Flanken der peripheren Einpassrippe an der Kante des Brillenglases durch Nachbilden der Form der Rillennute (57),
- wenn das zweite Bearbeitungswerkzeug (70) ausgewählt wurde, Bearbeiten der Kante (103) des Brillenglases (100) mittels der ersten Arbeitsfläche (72) des zweiten Bearbeitungswerkzeuges (70), um die hintere Flanke (122; 132) der peripheren Einpassrippe (120; 130) einzuarbeiten, während die vordere Flanke (121) der peripheren Einpassrippe (120; 130) in einem peripheren Teil (121) der Vorderseite (101) des Brillenglases eingearbeitet wird und mit dem Rest der Vorderseite eine Kontinuität mindestens ersten Ranges aufweist, ohne dass dieser periphere Teil in irgendeiner Weise bearbeitet wird, bzw. mit einer Bearbeitung dieses peripheren Teils, der eine Kante (142) mit einer Diskontinuität zweiten Ranges zum Vorschein bringt.

7. Verfahren nach vorausgehendem Anspruch, bei dem, wenn die Vorderseite (101) des Brillenglases (100) in einer annähernden Sphäre enthalten ist, die Auswahl des zweiten Bearbeitungswerkzeuges (70) realisiert wird, wenn der Radius der Sphäre unter 12 cm beträgt.

8. Verfahren nach einem der Ansprüche 6 und 7, bei dem man mit dem ersten Bearbeitungswerkzeug (55) eine digitale Simulation der Einarbeitung der peripheren Einpassrippe durchführt und man das zweite Bearbeitungswerkzeug (70) auswählt, wenn die digitale Simulation für mindestens einen Querschnitt der Rippe eine Beschneidung der Rippe in Bezug zur Vorgabe ergibt, wobei diese Beschneidung mehr als 10% des Flächenabschnitts beträgt.

9. Verfahren nach einem der Ansprüche 6 bis 8, bei dem die Kante (103) des Brillenglases (100) über ihre gesamte Breite (L) von der ersten Arbeitsfläche (72) bearbeitet wird.

10. Verfahren nach Anspruch 9, bei dem das zweite Bearbeitungswerkzeug eine Schleifscheibe oder eine Bearbeitungsfräse ist, deren erste Arbeitsfläche zylinderförmig ist und die zweite Rotationsachse in Bezug zur ersten Rotationsachse des Brillenglases geneigt ist.

11. Verfahren nach einem der Ansprüche 6 bis 8, bei dem, während das zweite Bearbeitungswerkzeug (70) eine zweite, um die gleiche Achse wie die erste Arbeitsfläche (72) drehende Arbeitsfläche (71) umfasst, das zweite Bearbeitungswerkzeug (70) mit dem Brillenglas (100) derart angeordnet ist, dass das Arbeitsaggregat (74) der zweiten Arbeitsfläche (71) zu jedem Zeitpunkt der Bearbeitung annähernd parallel zur ersten Rotationsachse (A2) des Brillenglases (100) ist, und dass, wenn das zweite Bearbeitungswerkzeug (70) ausgewählt wird, der restliche Bereich (L1) der Breite (L) der Brillenglaskante (103) von der zweiten Arbeitsfläche (71) bearbeitet wird, sodass ein hinterer Sockel oder Bund (124) der peripheren Einpassrippe (130) am Brillenglas (100) entsteht, wobei dieser hintere Sockel (124) mit der hinteren Flanke (132) der peripheren Einpassrippe (130) eine Diskontinuität zweiten Ranges aufweist.

12. Verfahren nach Anspruch 11, bei dem die radiale Höhe der peripheren Einpassrippe (120; 130), wenn man sie zwischen dem höchsten Punkt der peripheren Rippe und dem Sockel (124) betrachtet, entlang des Randes des Brillenglases variiert.

13. Verfahren nach einem der Ansprüche 11 und 12, bei dem das zweite Bearbeitungswerkzeug (70) eine Bearbeitungsschleifscheibe ist, deren erste Arbeitsfläche (72) kegelförmig und deren zweite Arbeitsfläche (71) zylinderförmig ist, wobei die zweite Rotationsachse (A4) des zweiten Bearbeitungswerkzeugs (70) zur ersten Rotationsachse (A2) des Brillenglases (100) parallel ist.

14. Verfahren nach einem der Ansprüche 6 bis 8, bei dem, während das zweite Bearbeitungswerkzeug (70) eine zweite sich drehende Arbeitsfläche (71) umfasst, das zweite Bearbeitungswerkzeug (70) derart mit dem Brillenglas (100) angeordnet ist, dass das Arbeitsaggregat (74) der zweiten Arbeitsfläche (71) in Bezug zur ersten Rotationsachse (A2) des Brillenglases (100) zu jedem Zeitpunkt der Bearbeitung weniger geneigt ist als das Arbeitsaggregat (73) der ersten Arbeitsfläche (72) und dass, wenn das zweite Bearbeitungswerkzeug (70) ausgewählt wird, der restliche Bereich (L1) der Breite (L) der Brillenglaskante (103) derart von der zweiten Arbeitsfläche (71) bearbeitet wird, dass ein hinterer Sockel (124) der peripheren Einpassrippe (130) des Brillenglases (100) entsteht.

15. Verfahren nach Anspruch 14, bei dem die radiale Höhe der peripheren Einpassrippe (120, 130), wenn man sie zwischen dem höchsten Punkt der peripheren Rippe und dem Sockel (124) betrachtet, entlang dem Rand des Brillenglases variiert.

16. Verfahren nach einem der Ansprüche 14 und 15, bei dem das zweite Bearbeitungswerkzeug (70) eine Bearbeitungsschleifscheibe ist, deren erste Arbeitsfläche (72) kegelförmig und deren zweite Arbeitsfläche (71) zylinderförmig ist, wobei die zweite Rotationsachse (A4) des zweiten Bearbeitungswerkzeuges (70) zur Bearbeitung zumindest eines Teils des Brillenglasrandes in Bezug zur ersten Rotationsachse (A2) des Brillenglases (100) geneigt ist.

17. Verfahren nach einem der Ansprüche 14 und 15, bei dem das zweite Bearbeitungswerkzeug eine Schleifscheibe oder Bearbeitungsfräse ist, deren erste und zweite Arbeitsflächen kegelförmig sind.

18. Verfahren nach einem der Ansprüche 6 bis 17, bei dem der Durchmesser des zweiten Bearbeitungswerkzeugs (70) kleiner ist als der Durchmesser des Brillenglases (100).

19. Verfahren nach einem der Ansprüche 6 bis 17, bei dem der Durchmesser des zweiten Bearbeitungswerkzeugs (70) zwischen 5 und 25 mm liegt.

20. Verfahren nach einem der Ansprüche 6 bis 17, bei dem man, wenn das zweite Bearbeitungswerkzeug (70) ausgewählt wurde, auch ein drittes Bearbeitungswerkzeug (90) mit einer dritten Arbeitsfläche (93) auswählt und man den peripheren Bereich (121) der Vorderseite (101) des Brillenglases mittels der dritten Arbeitsfläche (93) derart bearbeitet, dass der abgeschliffene periphere Bereich (121) der Vorderseite (101) des Brillenglases (100) die vordere Flanke (141) der peripheren Einpassrippe bildet.

21. Verfahren nach dem vorausgehenden Anspruch, bei dem das dritte Bearbeitungswerkzeug mit dem zweiten Bearbeitungswerkzeug zusammengefasst ist.
